(19) **Europäisches Patentamt**
**European Patent Office**
**Office européen des brevets**

(11) **EP 1 738 234 B1**

(12) **EUROPÄISCHE PATENTSCHRIFT**

(45) Veröffentlichungstag und Bekanntmachung des Hinweises auf die Patenterteilung:
**06.07.2011 Patentblatt 2011/27**

(21) Anmeldenummer: **05737815.0**

(22) Anmeldetag: **20.04.2005**

(51) Int Cl.:
***G05B 19/18*** *(2006.01)*    ***G05B 19/19*** *(2006.01)*

(86) Internationale Anmeldenummer:
**PCT/EP2005/051746**

(87) Internationale Veröffentlichungsnummer:
**WO 2005/103849 (03.11.2005 Gazette 2005/44)**

(54) **KORREKTURVERFAHREN FÜR ZERSPANUNGSMASCHINEN**

CORRECTION METHOD FOR CHIP REMOVAL MACHINES

PROCEDE DE CORRECTION POUR MACHINES D'ENLEVEMENT DE COPEAUX

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **21.04.2004 DE 102004019931**

(43) Veröffentlichungstag der Anmeldung:
**03.01.2007 Patentblatt 2007/01**

(73) Patentinhaber: **Schneider GmbH + Co. KG**
**35239 Steffenberg (DE)**

(72) Erfinder:
• **WEBER, Christoph**
**35216 Biedenkopf-Wallan (DE)**

• **SCHNEIDER, Gunter**
**35037 Marburg (DE)**

(74) Vertreter: **Thews, Karl et al**
**STT Sozietät Thews & Thews**
**Patentanwälte**
**Augustaanlage 32**
**68165 Mannheim (DE)**

(56) Entgegenhaltungen:
**WO-A-02/37168**

**Beschreibung**

Die Erfindung bezieht sich auf ein Verfahren zur Bestimmung einer Abweichung zumindest einer Regelgröße von Zerspanungsmaschinen mit einem über eine Steuerung geregelten mechanischen Antrieb für ein Werkzeug und/ oder ein Werkstück, wobei die Regelung mehrere Werte C, X, Z von mindestens drei Raumachsen c, x, z für die Steuerung und für den Antrieb aufweist und die Werte C, X, Z bezüglich der Achsen c, x, z einen funktionellen Zusammenhang in der Art $Z = f_{bi}(C, X)$ aufweisen bei dem aus mehreren durch Messmittel erfasste Steuerungs-Ist-Werten $(C_{p,s}, X_{p,s}, Z_{p,s})$ und/oder ausgelesene Antriebs-Ist-Werten $(C_{p,a}, X_{p,a}, Z_{p,a})$ ein Protokoll erstellt wird und zumindest bezüglich der z-Achse ein Steuerungs-Soll-Wert nach $Z_{bi,s} = f_{bi}(C_{p,s}, X_{p,s})$ und/oder ein Antriebs-Soll-Wert nach $Z_{bi,a} = f_{bi}(C_{p,a}, X_{p,a})$ berechnet wird, wobei zumindest bezüglich der z-Achse ein Steuerungs-Differenzwert nach $D_{z,s} = Z_{p,s} - Z_{bi,s}$ und/oder ein Antriebs-Differenzwert nach $D_{z,a} = Z_{p,a} - Z_{bi,a}$ berechnet wird.

Die Erfindung betrifft auch eine Zerspanungsmaschine mit einem über eine Steuerung geregelten mechanischen Antrieb für ein Werkzeug und/oder ein Werkstück, wobei die Regelung mehrere Werte C, X, Z von mindestens drei Raumachsen c, x, z für die Steuerung und für den Antrieb aufweist.

Es ist insbesondere von laufenden Herstellungsprozessen bereits allgemein bekannt, die von einer Steuerung berechneten oder vorgegebenen Soll-Größen mit den Ist-Größen des Werkzeugs zu vergleichen, um so eine Anpassung der Ist-Größen vorzunehmen. Ähnliches beschreibt auch die CH 425 958. Bei hochdynamischen Prozessen mit mehreren miteinander funktionell verknüpften Achsen ist dieses Regelungsverfahren jedoch nicht anwendbar, da zum Beispiel von dem Zeitpunkt der Abgabe der Soll-Größe von der Steuerung an den Antrieb an bis dem Zeitpunkt der tatsächlichen Positionierung des Antriebs etwa vier Arbeits- und Rechentakte vollzogen worden sind. Die Steuerung gibt in der Regel zudem einen Vorsteuerwert separat vor, der die Einstellungen des Antriebs bzw. den Steuerstrom des Antriebs in gewünschter Weise beeinflusst. Damit sind die Soll-Größen und die jeweiligen Ist-Größen nicht mehr zuzuordnen bzw. zu vergleichen.

Bisher hat man das Werkstück nach der Herstellung optisch oder mechanisch vermessen und so auf etwaige Abweichungen beim Herstellungsprozess geschlossen.

Die WO 02/37168 A beschreibt ein Verfahren zur Steuerung einer 4-Achsen (Z, Z', C, X) Zerspanungsmaschine, bei der ein funktioneller Zusammenhang in der Form $Z = f(C, X)$ besteht. Dabei wird eine "feed forward" - Regelung beschrieben, die den erfindungsgemäßen Differenzwert nicht vorsieht.

Aus der DE 199 19 147 A1 ist ein Verfahren zur Bestimmung einer Abweichung zumindest einer Regelgröße von Zerspanungsmaschinen mit einem über eine Steuerung geregelten mechanischen Antrieb für ein Werkzeug und ein Werkstück bekannt, wobei die Regelung mehrere Werte C, X bezüglich mindestens zweier Raumachsen c, x für den Antrieb regelt und die Werte C, X bezüglich der Achsen c, x einen funktionellen Zusammenhang $x = f(c)$ aufweisen, wobei mit mehreren durch Messmittel erfassten Antriebs-Ist-Werten (C_ist, X_ist) ein Protokoll erstellt wird. Aus dem funktionellen Wert X_soll_ist, abgeleitet aus dem Ist-Wert C_ist und dem gemessenen Ist-Wert X_ist des Antriebs wird eine Differenz gebildet, die den Konturfehler darstellt.

Der Erfindung liegt die Aufgabe zugrunde, ein Bearbeitungsverfahren derart auszubilden und anzuordnen, dass eine optimale Darstellung der Abweichung zwischen dem Soll-Wert und dem tatsächlich generierten Werkstück-Wert gewährleistet ist.

Gelöst wird die Aufgabe erfindungsgemäß durch ein Verfahren nach Anspruch 1 und eine danach arbeitende Zerspanungsmaschine nach Anspruch 19.

Entsprechendes ist für die c-Achse und die x-Achse vorgesehen.

Es ist zu beachten, dass zur Berechnung des Soll-Wertes wie z. B. $Z_{bi,a}$ der jeweilige Protokollwert, also der Ist-Wert wie z. B. $C_{p,a}$ und $X_{p,a}$ verwendet wird.

Der Ist-Wert einer Achse wird mit dem berechneten Soll-Wert dieser Achse auf der Basis der Ist-Werte der anderen Achsen unter Einbeziehung deren funktionellen Zusammenhangs $f_{bi}$ verglichen. Dieser Ist-Wert kommt dem tatsächlichen Wert, wie er gegebenenfalls nur vereinzelt durch ein nachträgliches Messverfahren, zum Beispiel durch mechanisches Abtasten oder durch ein optisches Messverfahren wie ein Hologramm, ermittelt werden könnte, sehr nahe. Die geringe Anzahl von Messpunkten beim mechanischen Abtasten lässt ohnehin keine Auswertung von kleinen Fehlern zu, die beispielsweise aus dem Haftreibungsverhalten eines defekten Maschinenachsenlagers hervorgerufen werden, da eine solche Auflösung nicht möglich ist. Daneben ist das optische Messverfahren äußerst aufwendig und langwierig, so dass die Anzahl verschiedener Werkstücke bzw. die Herstellungsvariation sehr begrenzt ist.

Dabei ist es vorgesehen, dass mindestens eine Raumachse als translatorische Raumachse x, z und mindestens eine Raumachse als rotatorische Raumachse c ausgebildet sein kann.

Dass zumindest für den Antrieb und die z-Achse ein Schlepp-Differenzwert nach $D_{z,a}{}^{\varphi} = Z_{p,a} - Z_{bi,a}{}^{\varphi}$ mit $Z_{bi,a}{}^{\varphi} = f_{bi}(C_{p,a} + \Delta\varphi, X_{p,a})$ ermittelt wird, wobei der Wert $\Delta\varphi$ einer Phasenverschiebung der c-Achse entspricht, gewährleistet, dass der Einfluss einer kontinuierlichen bzw. konstanten Phasenverschiebung $\Delta\varphi$ der c-Achse bei der Qualitätsbestimmung des Schneidvorgangs unberücksichtigt bleibt. Diese Phasenverschiebung $\Delta\varphi$ führt letztlich lediglich zu einer Verdrehung der generierten Linsenkontur, ausgehend von einer theoretischen Anfangsposition, wobei die Verdrehung durch eine Korrektur der Einbauposition der so hergestellten Linse ausgeglichen wird.

Eine zusätzliche Möglichkeit ist gemäß einer Weiterbildung, dass die Phasenverschiebung $\Delta\varphi$ zwischen 0,5° und 3°, insbesondere 1,0° beträgt, wobei die Ermittlung von $Z_{bi,a}{}^{\varphi}$ zwischen $+\Delta\varphi$ und $-\Delta\varphi$ mit einer Schrittgröße zwischen 0,05° und 0,2°, insbesondere von 0,1° erfolgt. Damit ist eine ausreichende Auflösung zur Erkennung eines Schleppfehlers gegeben.

Ferner ist es vorteilhaft, dass zumindest aus den Differenzwerten $D_{z,s}$, $D_{z,a}$ und/oder den Schlepp-Differenzwerten $O_{z,a}{}^{\varphi}$ zumindest der z-Achse je ein peak-to-valley Wert für die Steuerung nach $D_{z,s,ptv} = D_{z,s,max} - D_{z,s,min}$ und für den Antrieb nach $D_{z,a,ptv} = D_{z,a,max} - D_{z,a,min}$, $D_{z,a}{}^{\varphi}{}_{ptv} = D_{z,a,max}{}^{\varphi} - D_{z,a,min}{}^{\varphi}$ berechnet wird, wobei $D_{z,s/a,min}$ dem minimalen und $D_{z,s/a,max}$ dem maximalen Differenzwert der jeweiligen Messung und $D_{z,a,max}{}^{\varphi}$, $D_{z,a,min}{}^{\varphi}$ dem minimalen bzw. dem maximalen Differenzwert unter Berücksichtigung von $+/\Delta\varphi$ entspricht. Entsprechendes ist auch für die anderen Achsen vorgesehen.

Vorteilhaft ist es auch, dass zumindest für den Antrieb und zumindest bezüglich der z-Achse ein Fehler-Differenzwert nach $D_{z,a}{}^{f} = Z_{p,a} - Z_{bi,a}{}^{f}$ mit $Z_{bi,a}{}^{f} = f_{bi} (C_{p,s}, X_{p,s})$ ermittelt wird. Der Fehler-Differenzwert $O_{z,a}{}^{f}$ gilt dabei als Maß für die Abweichung des jeweiligen Schneidprozesses, der auch das Erkennen von weiteren Maschineneinflussgrößen wie Lagerfehler ermöglicht. Entsprechendes ist auch für die Steuerung und die jeweiligen anderen Achsen vorgesehen.

Dabei ist es vorgesehen, dass die Funktion $f_{bi}$ einen 3-D bikubischen Flächenspline und/oder Spiralspline darstellt. Durch die an jedem Gitterpunkt des Flächensplines bekannten Polynomkoeffizienten kann jeder beliebige Punkt im Gitter des Flächensplines berechnet werden. Der Spiralspline wird ausgehend von verschiedenen Gitter-Punkten des Flächensplines über die Polynomkoeffizienten berechnet.

Von Bedeutung ist für die vorliegende Erfindung, dass die Differenzwerte $D_{z,a}$, $D_{z,s}$, die Schlepp-Differenzwerte $_{Dz,a}{}^{\varphi}$, die jeweiligen peak-to-valley-Werte $D_{z,a,ptv}$, $D_{z,s,ptv}$, $D_{z,a}{}^{\varphi}{}_{ptv}$ und/oder der Ist-Wert $Z_{p,s}$, $Z_{p,a}$ zumindest der z-Achse dargestellt werden, wobei zumindest die Darstellung von $D_{za,ptv}$, $D_{z,s,ptv}$ und/oder $D_{z,a}{}^{\varphi}{}_{ptv}$ mit dem jeweils kleinsten peak-to-valley-Wert erfolgt. Die anderen Messwerte, denen eine andere Phasenverschiebung $\Delta\varphi$ bzw. ein anderer Schleppfehler der c-Achse zugrunde liegt, werden dabei wie oben beschrieben vernachlässigt. Dieser Phasenverschiebung $\Delta\varphi$ kann durch die Einbauposition Rechnung getragen werden. Entsprechendes ist auch für die Steuerung und die jeweiligen anderen Achsen vorgesehen.

Im Zusammenhang mit der erfindungsgemäßen Ausbildung und Anordnung ist es von Vorteil, dass die Größe und/oder die Abweichung zumindest des peak-to-valley Wertes $D_{z,a,ptv}$, $D_{z,a}{}^{\varphi}{}_{ptv}$, $D_{z,s,ptv}$ und/oder des Ist-Wertes $Z_{p,s}$, $Z_{p,a}$ über der jeweiligen Werkstückposition dargestellt wird. Die Darstellung kann dabei über eine Umfangslinie und/oder eine Umfangsspirale unter Angabe des Winkels und des Radius erfolgen.

Vorteilhaft ist es ferner, dass bei der Darstellung des Differenzwertes und/oder des Schlepp-Differenzwertes $O_{z,s}$, $D_{z,a}$, $D_{z,a}{}^{\varphi}$ zwischen negativen und positiven Werten optisch und/oder nach dem Betrag der Werte optisch unterschieden wird. Dabei ist es besonders vorteilhaft, dass positive und/oder negative Differenzwerte und/oder Schlepp-Differenzwerte $D_{z,s}$, $D_{z,a}$, $D_{z,a}{}^{\varphi}$ ihrem Betrag nach mit unterschiedlichen Farbtönen in der dem Betrag entsprechenden Intensität optisch abgestuft werden. Positive Differenzwerte und/oder Schlepp-Differenzwerte $D_{z,s}$, $D_{z,a}$, $D_{z,a}{}^{\varphi}$ könnten dabei ihrem Betrag nach beispielsweise von gelb nach rot abgestuft werden und negative Differenzwerte und/oder Schlepp-Differenzwerte $D_{z,s}$, $D_{z,a}$, $D_{z,a}{}^{\varphi}$ ihrem Betrag nach von grün nach blau. Andere Farbstufen sind auch vorgesehen. Daneben ist eine Abstufung durch verschiedene Muster in der Art des Ausführungsbeispiels vorgesehen.

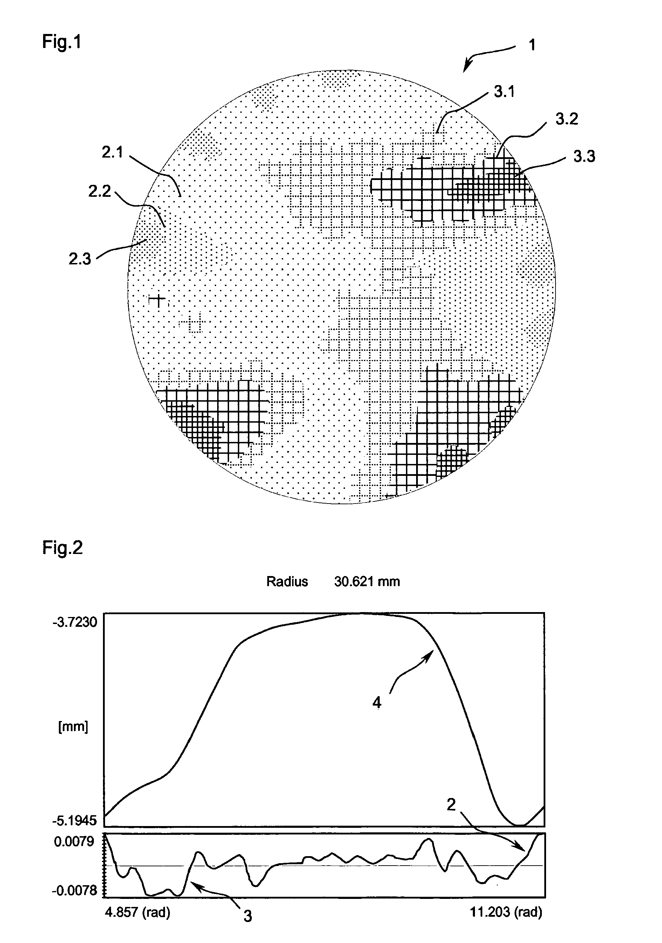

Ferner ist es vorteilhaft, dass eine überlagerte Darstellung des Differenzwertes und/oder des Schlepp-Differenzwertes $D_{z,s}$, $D_{z,a}$, $D_{z,a}{}^{\varphi}$ und des Ist-Wertes $Z_{p,s}$, $Z_{p,a}$ vorgesehen ist, wobei der jeweilige Maßstab für beide Werte unterschiedlich ist. Während sich der absolute Ist-Wert $Z_{p,s}$, $Z_{p,a}$ im Bereich von mehreren Millimetern bewegt, liegen die Differenzwerte $D_{z,s}$, $D_{z,a}$, $D_{z,a}{}^{\varphi}$ bei Mikrometern, also um den Faktor 1000 niedriger. Die Darstellung gemäß Figur 2 ist dabei dennoch aussagekräftig.

Daneben ist es von Vorteil, dass für eine oder mehrere andere Achsen x, c die Soll-Werte $C_{bi}$, $X_{bi}$, die Differenzwerte $D_{x/c,a}$, $D_{x/c,s}$, der peak-to-valley Wert $D_{x/c,a,ptv}$, $D_{x/c,a}{}^{\varphi}{}_{ptvr}$, $D_{x/c,s,ptv}$, $D_{x/c,s}{}^{\varphi}{}_{ptv}$, der Fehler-Differenzwert $D_{x/c,a}{}^{f}$, $D_{x/c,s}{}^{f}$ und/oder der Schlepp-Differenzwert $D_{x/c,s}{}^{\varphi}$, $O_{x/c,a}{}^{\varphi}$ für die Steuerung und/oder für den Antrieb berechnet werden. Somit ist eine umfassende Auswertung des Schneidergebnisses möglich.

Schließlich ist es von Vorteil, dass bei der spanenden Bearbeitung des Werkstücks neben einem Hauptschnitt und einem optionalen Feinschnitt zusätzlich ein Korrekturschnitt, zumindest unter Verwendung der Differenzwerte $D_{z,s}$, $D_{z,a}$, $D_{z,a}{}^{\varphi}$ vorgesehen ist. Neben der Möglichkeit, das vorgehend beschriebene Verfahren zur Einstellung der verschiedenen Parameter der Zerspanungs- bzw. Schneidemaschine zu nutzen, kann nach einem Hauptschnitt, der in der Regel das Ende der schneidenden Bearbeitung darstellt, zusätzlich ein Korrekturschnitt vorgesehen werden. Durch den Korrekturschnitt können dann zumindest die positiven Abweichungen des Werkstücks nachträglich spanend bearbeitet werden.

Besonders vorteilhaft ist es hierzu auch, dass das vorgehend genannte Verfahren für eine Zerspanungsmaschine zum Herstellen von optischen Linsen aus Kunststoff eingesetzt wird.

Letztlich ist es von Vorteil, dass die Werte C, X, Z der Achsen c, x, z in das kartesische Koordinatensystem oder in das Polarkoordinatensystem umgerechnet werden. Der Wechsel zwischen verschiedenen Koordinatensystemen ermöglicht den Umgang mit den verschiedensten Kunden- und Herstellerdaten.

Dabei ist es vorteilhaft, dass ausgehend von einem theoretischen Schneidpunkt eines idellen punktförmigen Werkzeugs die Werte C, X, Z der Achsen c, x, z für den Einsatz eines kreisförmigen Schneidplättchens umgerechnet werden, wobei das kreisförmige Schneidplättchen einen Mittelpunkt aufweist, der dem theoretischen Schneidpunkt entspricht. Diese sogenannten off-set-Daten stellen die Grundlage für den oben genannten Flächenspline dar, der damit die off-set-Fläche bestimmt, die als Grundlage für den Spiralspline dient.

Hierbei ist es vorteilhaft, dass zumindest ein Differenzwert $D_{z,a}$ und/oder ein Schlepp-Differenzwert $D_{z,a}{}^{\varphi}$ als Ausschlusskriterium für die Steuerungs-Ist-Werte ($C_{p,s}$, $X_{p,s}$, $Z_{p,s}$) und/oder als Einstellungskriterium für die verschiedenen Maschinenparameter bzw. die Maschinensteuerung verwendet wird.

Mit der Anwendung des vorstehend beschriebenen Verfahrens zur Bestimmung der Abweichung der Regelgrößen werden die ebenfalls vorstehend genannten Vorteile erreicht.

Dabei ist es vorteilhaft, dass eine Ausgabeeinheit für die Darstellung der vorgehend beschriebenen Werte, insbesondere der Differenzwerte $D_{z,a}$ und/oder der Schlepp-Differenzwerte $D_{z,a}{}^{\varphi}$ vorgesehen ist.

Weitere Vorteile und Einzelheiten der Erfindung sind in den Patentansprüchen und in der Beschreibung erläutert und in den Figuren dargestellt. Es zeigt:

Figur 1    eine Darstellung der Differenzwerte einer Linsenoberfläche;

Figur 2    die Darstellung des z-Wertes mit der Darstellung des entsprechenden Differenzwertes.

Ein in Figur 1 dargestelltes Werkstück bzw. eine optische Linse 1 weist eine von der Soll-Oberfläche abweichende und insoweit fehlerbehaftete Ist-Oberfläche auf.

Ausgehend von einer nicht dargestellten Soll-Oberfläche besitzt die hier dargestellte Oberfläche verschiedene Gebiete 2.1 - 2.3, 3.1 - 3.3, in denen der Ist-Wert von dem theoretischen Soll-Wert abweicht. Dabei handelt es sich bei den mit 2.1 - 2.3 gekennzeichneten Gebieten, also den gepunkteten Flächen, um positive Abweichungen 2 vom Soll-Wert und bei den Gebieten 3.1 - 3.3, also den kariert gekennzeichneten Gebieten, um negative Abweichungen 3 vom Soll-Wert.

Neben der grundsätzlichen Unterscheidung zwischen positiven 2.1 - 2.3 und negativen 3.1 - 3.3 Abweichungen, also positiven und negativen Differenzwerten, werden die jeweiligen Differenzwerte auch dem Betrag nach abgestuft. So finden sich die positiven Differenzwerte betreffend neben den Gebieten mit einer Abweichung 1. Grades (2.1) auch Gebiete mit einer Abweichung 2. Grades (2.2) sowie 3. Grades (2.3). Bei den verschiedenen Abstufungsgraden handelt es sich bei dieser Darstellungsweise mit grundsätzlich getrennten unterschiedlichen Mustern um verschiedene Abweichungswertbereiche, die dem jeweiligen Abweichungsgrad zumindest optisch zugeordnet werden. Bei einer hier nicht dargestellten farblichen Abstufung sind die verschiedenen Abweichungsgrade weniger digitalisiert bzw. fließend ineinander übergehend.

In entsprechender Weise sind bei den negativen Differenzwerten, kariert dargestellt, ebenfalls Gebiete mit Abweichungen 1. Grades (3.1), Abweichungen 2. Grades (3.2) und Abweichungen 3. Grades (3.3) gegeben.

In einem nicht dargestellten Ausführungsbeispiel ist es ebenfalls vorgesehen, weitere über diese Abweichungsgrade hinausgehende digitalisierte Abweichungsgrade vorzusehen, die eine höhere Auflösung dieser Differenzwertstruktur gewährleisten.

Das in Figur 2 dargestellte Schaubild zeigt den z-Wert 4 der in Figur 1 dargestellten Linse 1 zum einen absolut (oberes Schaubild) und zum anderen den jeweiligen Differenzwert zum Soll-Wert (unteres Schaubild). In beiden Darstellungen ist aufgrund der sehr unterschiedlichen Größe des z-Wertes 4 sowie des Differenzwertes dem Betrag nach eine unterschiedliche Skalierung vorgesehen. Dem hier dargestellten z-Wert 4 ist ein Außenradius von 30,621 mm zugrunde gelegt, also nahe am Rand der Linse mit einem Durchmesser von ca. 60 mm. Ausgehend von einem Anfangswert 0,0, der dem unbearbeiteten Rohling zugrunde liegt, verläuft der hier gezeigte Ist-z-Wert 4 in einem Bereich zwischen 3,723 mm und 5,194 mm unterhalb des ehemaligen 0-Niveaus. Der entsprechende Differenzwert, also der Abweichungswert des dargestellten Ist-z-Wertes 4 verläuft dabei zischen 7,9 $\mu$m oberhalb und 7,8 $\mu$m unterhalb des Soll-z-Wertes 4. In einem nicht dargestellten Ausführungsbeispiel ist eine überlagerte Darstellung der beiden Werte zumindest über einen Teilbereich und mit ausreichender Skalierung vorgesehen.

Bezugszeichenliste

1    Werkstück
2    positive Abweichung

| | |
|---|---|
| 2.1 | positive Abweichung 1. Grades |
| 2.2 | positive Abweichung 2. Grades |
| 2.3 | positive Abweichung 3. Grades |
| 3 | negative Abweichung |
| 3.1 | negative Abweichung 1. Grades |
| 3.2 | negative Abweichung 2. Grades |
| 3.3 | negative Abweichung 3. Grades |
| 4 | z-Wert |

**Patentansprüche**

1. Verfahren zur Bestimmung einer Abweichung zumindest einer Regelgröße von Zerspanungsmaschinen zum Herstellen von optischen Linsen aus Kunststoff mit einem über eine Steuerung geregelten mechanischen Antrieb für ein Werkzeug und/oder ein Werkstück (1), wobei die Regelung mehrere Werte C, X, Z bezüglich mindestens dreier Raumachsen c, x, z für die Steuerung und für den Antrieb regelt und die Werte C, X, Z bezüglich der Achsen c, x, z einen funktionellen Zusammenhang $f_{bi}$ in der Form $Z = f_{bi}(C, X)$ aufweisen, wobei

a) mit mehreren durch Messmittel erfassten Steuerungs-Ist-Werten ($C_{p,s}$, $X_{p,s}$, $Z_{p,s}$) und/oder Antriebs-Ist-Werten ($C_{p,a}$, $X_{p,a}$, $Z_{p,a}$) ein Protokoll erstellt wird,
b) zumindest bezüglich der z-Achse ein Steuerungs-Soll-Wert nach

$$Z_{bi,s} = f_{bi}\,(C_{p,s},\ X_{p,s})$$

und/oder ein Antriebs-Soll-Wert nach

$$Z_{bi,a} = f_{bi}\,(C_{p,a},\ X_{p,a})$$

berechnet wird,
c) zumindest bezüglich der z-Achse ein Steuerungs-Differenzwert nach

$$D_{z,s} = Z_{p,s} - Z_{bi,s}$$

und/oder ein Antriebs-Differenzwert nach

$$D_{z,a} = Z_{p,a} - Z_{bi,a}$$

berechnet wird,
d) zumindest für den Antrieb und die z-Achse ein Schlepp-Differenzwert nach

$$D_{z,a}{}^{\varphi} = Z_{p,a} - Z_{bi,a}{}^{\varphi}$$

mit

$$Z_{bi,a}{}^{\varphi} = f_{bi}\,(C_{p,a} + \Delta\varphi,\ X_{p,a})$$

ermittelt wird, wobei der Wert $\Delta\varphi$ einer Phasenverschiebung der c-Achse entspricht.

2. Verfahren nach Anspruch 1,
**dadurch gekennzeichnet,**
**dass** die Phasenverschiebung $\Delta\varphi$ zwischen 0,5° und 3°, insbesondere 1,0° beträgt, wobei die Ermittlung von $Z_{bi,a}{}^{\varphi}$ zwischen $+\Delta\varphi$ und $-\Delta\varphi$ mit einer Schrittgröße zwischen 0,05° und 0,2°, insbesondere von 0,1° erfolgt.

3. Verfahren nach Anspruch 1 oder 2,
**dadurch gekennzeichnet,**
**dass** zumindest aus den Differenzwerten $D_{z,s}$, $D_{z,a}$ und/oder den Schlepp-Differenzwerten $D_{z,a}{}^{\varphi}$ zumindest der z-Achse je ein peak-to-valley Wert für die Steuerung nach

$$D_{z,s,ptv} = D_{z,s,max} - D_{z,s,min}$$

und für den Antrieb nach

$$D_{z,a,ptv} = D_{z,a,max} - D_{z,a,min}$$

$$D_{z,a}{}^{\varphi}{}_{ptv} = D_{z,a,max}{}^{\varphi} - D_{z,a,min}{}^{\varphi}$$

berechnet wird, wobei $D_{z,s/a,min}$ dem minimalen und $O_{z,s/a,max}$ dem maximalen Differenzwert der jeweiligen Messung und $D_{z,a,max}{}^{\varphi}$, $D_{z,a,min}{}^{\varphi}$ dem minimalen bzw. dem maximalen Differenzwert unter Berücksichtigung von +/- $\Delta\varphi$ entspricht.

4. Verfahren nach einem der vorhergehenden Ansprüche,
**dadurch gekennzeichnet,**
**dass** zumindest für den Antrieb und zumindest bezüglich der z-Achse ein Fehler-Differenzwert nach

$$D_{z,a}{}^{f} = Z_{p,a} - Z_{bi,a}{}^{f}$$

mit

$$Z_{bi,a}{}^{f} = f_{bi}\ (C_{p,s},\ X_{p,s})$$

ermittelt wird.

5. Verfahren nach einem der vorhergehenden Ansprüche,
**dadurch gekennzeichnet,**
**dass** die Funktion $f_{bi}$ einen bikubischen Flächenspline und/oder Spiralspline darstellt.

6. Verfahren nach einem der vorhergehenden Ansprüche,
**dadurch gekennzeichnet,**
**dass** die Differenzwerte $D_{z,a}$, $D_{z,s}$ und/oder die Schlepp-Differenzwerte $D_{z,a}{}^{\varphi}$ und/oder der Ist-Wert $Z_{p,s}$, $Z_{p,a}$ zumindest der z-Achse dargestellt werden.

7. Verfahren nach einem der Ansprüche 3 bis 6,
**dadurch gekennzeichnet,**
**dass** die jeweiligen peak-to-valley-Werte $D_{z,a,ptv}$, $D_{z,s,ptv}$, $D_{z,a}{}^{\varphi}{}_{ptv}$ und/oder der Ist-Wert $Z_{p,s}$, $Z_{p,a}$ zumindest der z-Achse dargestellt werden, wobei zumindest die Darstellung des jeweils kleinsten peak-to-valley-Wertes erfolgt.

8. Verfahren nach Anspruch 6 oder 7,

**dadurch gekennzeichnet,**
**dass** die Größe und/oder die Abweichung zumindest des peak-to-valley Wertes $D_{z,a,ptv}$, $D_{z,a}{}^{\varphi}{}_{ptv}$, $D_{z,s,ptv}$ und/oder des Ist-Wertes $Z_{p,s}$, $Z_{p,a}$ über der jeweiligen Werkstückposition dargestellt wird.

9.  Verfahren nach Anspruch 6, 7 oder 8,
    **dadurch gekennzeichnet,**
    **dass** bei der Darstellung des Differenzwertes und/oder des Schlepp-Differenzwertes $D_{z,s}$, $D_{z,a}$, $D_{z,a}{}^{\varphi}$ zwischen negativen (3) und positiven (2) Werten und/oder nach dem Betrag (3.1 - 3.3, 2.1 - 2.3) der Werte optisch unterschieden wird.

10. Verfahren nach einem der Ansprüche 6 bis 9,
    **dadurch gekennzeichnet,**
    **dass** positive (2) und/oder negative (3) Differenzwerte und/oder Schlepp-Differenzwerte $D_{z,s}$, $D_{z,a}$, $D_{z,a}{}^{\varphi}$ ihrem Betrag (3.1 - 3.3, 2.1 - 2.3) nach mit unterschiedlichen Farbtönen und/oder dem Betrag (3.1 - 3.3, 2.1 - 2.3) der Werte nach mit unterschiedlichen Farbtonintensitäten optisch abgestuft werden.

11. Verfahren nach einem der Ansprüche 6 bis 10,
    **dadurch gekennzeichnet,**
    **dass** eine überlagerte Darstellung des Differenzwertes und/oder des Schlepp-Differenzwertes $D_{z,s}$, $D_{z,a}$, $D_{z,a}{}^{\varphi}$ und des Ist-Wertes $Z_{p,s}$, $Z_{p,a}$ vorgesehen ist, wobei der jeweilige Maßstab für beide Werte unterschiedlich ist.

12. Verfahren nach einem der Ansprüche 1 bis 5,
    **dadurch gekennzeichnet,**
    **dass** für eine oder mehrere andere Achsen x, c die Soll-Werte $C_{bi}$, $X_{bi}$ und/oder die Differenzwerte $D_{x/c,a}$, $D_{x/c,s}$ und/oder der Schlepp-Differenzwert $D_{x/c,s}{}^{\varphi}$, $D_{x/c,a}{}^{\varphi}$ für die Steuerung und/oder für den Antrieb berechnet werden.

13. Verfahren nach einem der Ansprüche 3 bis 5,
    **dadurch gekennzeichnet,**
    **dass** für eine oder mehrere andere Achsen x, c der peak-to-valley-Wert $D_{x/c,a,ptv}$, $D_{x/c,a}{}^{\varphi}{}_{ptv}$, $D_{x/c,s,ptv}$, $D_{x/c,s}{}^{\varphi}{}_{ptv}$ für die Steuerung und/oder für den Antrieb berechnet wird.

14. Verfahren nach einem der Ansprüche 4 bis 5,
    **dadurch gekennzeichnet,**
    **dass** für eine oder mehrere andere Achsen x, c der Fehler-Differenzwert $D_{x/c,a}{}^{f}$, $D_{x/c,s}{}^{f}$ für die Steuerung und/oder für den Antrieb berechnet wird.

15. Verfahren nach einem der Ansprüche 1 bis 5 oder 12 bis 14,
    **dadurch gekennzeichnet,**
    **dass** bei der spanenden Bearbeitung des Werkstücks (1) neben einem Hauptschnitt und einem optionalen Feinschnitt zusätzlich ein Korrekturschnitt, zumindest unter Verwendung der Differenzwerte $D_{z,s}$, $D_{z,a}$, $D_{z,a}{}^{\varphi}$ vorgesehen ist.

16. Verfahren nach Anspruch 1,
    **dadurch gekennzeichnet,**
    **dass** die Werte C, X, Z der Achsen c, x, z in das kartesische Koordinatensystem oder in das Polarkoordinatensystem umgerechnet werden.

17. Verfahren nach Anspruch 1,
    **dadurch gekennzeichnet,**
    **dass** ausgehend von einem theoretischen Schneidpunkt eines idellen punktförmigen Werkzeugs die Werte C, X, Z der Achsen c, x, z für den Einsatz eines kreisförmigen Schneidplättchens umgerechnet werden, wobei das kreisförmige Schneidplättchen einen Mittelpunkt aufweist, der dem theoretischen Schneidpunkt entspricht.

18. Verfahren nach einem der Ansprüche 1 bis 15,
    **dadurch gekennzeichnet,**
    **dass** zumindest ein Differenzwert $D_{z,a}$ und/oder ein Schlepp-Differenzwert $D_{z,a}{}^{\varphi}$ als Ausschlusskriterium für die Steuerungs-Ist-Werte ($C_{p,s}$, $X_{p,s}$, $Z_{p,s}$) und/oder als Einstellungskriterium für die verschiedenen Maschinenparameter verwendet wird.

**19.** Zerspanungsmaschine mit einem über eine Steuerung geregelten mechanischen Antrieb für ein Werkzeug und/ oder ein Werkstück (1), wobei die Regelung mehrere Werte C, X, Z von mindestens drei Raumachsen c, x, z für die Steuerung und für den Antrieb aufweist,
**dadurch gekennzeichnet,**
**dass** zur Bestimmung der Abweichung der Regelgrößen ein Verfahren nach einem der Ansprüche 1 bis 14 Anwendung findet.

**Claims**

**1.** Method for determining a deviation of at least one controlled variable of chip removal machines for the manufacturing of plastic optical lenses with a mechanical drive for a tool and/or a workpiece (1), said mechanical drive being closed-loop controlled by a control system, wherein the closed-loop control controls several values C, X, Z with respect to at least three spatial axes c, x, z for the control system and for the drive and the values C, X, Z with respect to the axes c, x, z have a functional interrelationship $f_{bi}$ in the form of $Z = f_{bi}(C, X)$, wherein

a) a protocol is prepared with several control-system actual values $(C_{p,s}, Xp_{,s}, Z_{p,s})$ and/or drive actual values $(C_{p,a}, X_{p,a}, Z_{p,a})$, which actual values are picked up by measuring means,
b) at least with respect to the z-axis, a control-system desired value is calculated according to $Z_{bi,s} = f_{bi}(C_{p,s}, X_{p,s})$ and/or a drive desired value is calculated according to $Z_{bi,a} = f_{bi}(C_{p,a}, X_{p,a})$,
c) at least with respect to the z-axis, a control-system differential value is calculated according to $D_{z,s} = Z_{p,s} - Z_{bi,s}$ and/or a drive differential value is calculated according to $D_{z,a} = Z_{p,a} - Z_{bi,a}$,
d) at least for the drive and the z-axis, a contouring differential value is determined according to $D_{z,a}^{\varphi} = Z_{p,a} - Z_{bi,a}^{\varphi}$ with $Z_{bi,a}^{\varphi} = f_{bi}(C_{p,a}, + \Delta\varphi, X_{p,a})$, wherein the value $\Delta\varphi$ corresponds to a phase shift of the c-axis.

**2.** Method according to claim 1, **characterised in that** the phase shift $\Delta\varphi$ is between 0.5 ° and 3°, in particular 1.0°, wherein the determination of $Z_{bi,a}^{\varphi}$ between $+\Delta\varphi$ and $-\Delta\varphi$ is carried out with an increment of between 0.05° and 0.2°, in particular of 0.1°.

**3.** Method according to claim 1 or 2, **characterised in that** one peak-to-valley value each is calculated for the control system according to

$$D_{z,s,ptv} = D_{z,s,max} - D_{z,s,min}$$

and for the drive according to

$$D_{z,a,ptv} = D_{z,a,max} - D_{z,a,min}$$

$$D_{z,a}{}^{\varphi}{}_{ptv} = D_{z,a,max}{}^{\varphi} - D_{z,a,min}{}^{\varphi}$$

at least from the differential values $D_{z,s}$, $D_{z,a}$ and/or from the contouring differential values $D_{z,a}^{\varphi}$ at least of the z-axis, wherein $D_{z,s/a,min}$ corresponds to the minimum differential value and $D_{z,s/a,max}$ to the maximum differential value of the respective measurement and $D_{z,a,max}^{\varphi}$, $D_{z,a,min}^{\varphi}$ corresponds to the minimum differential value and the maximum differential value, respectively, taking $+/-\Delta\varphi$ into account.

**4.** Method according to any one of the preceding claims, **characterised in that** an error differential value is determined according to $D_{z,a}^{f} = Z_{p,a} - Z_{bi,a}^{f}$ with $Z_{bi,a}^{f} = f_{bi}(C_{p,s}, X_{p,s})$ at least for the drive and at least with respect to the z-axis.

**5.** Method according to any one of the preceding claims, **characterised in that** the function $f_{bi}$ represents a bicubic surface spline and/or a spiral spline.

**6.** Method according to any one of the preceding claims, **characterised in that** the differential values $D_{z,a}$, $D_{z,s}$ and/or the contouring differential values $D_{z,a}^{\varphi}$ and/or the actual value $Z_{p,s}$, $Z_{p,a}$ of at least the z-axis are represented.

7. Method according to any one of claims 3 to 6, **characterised in that** the respective peak-to-valley values $D_{z,a,ptv}$, $D_{z,s,ptv}$, $D_{z,a}{}^{\varphi}{}_{ptv}$ and/or the actual value $Z_{p,s}$, $Z_{p,a}$ of at least the z-axis are represented, wherein at least the smallest peak-to-valley value is represented in each case.

8. Method according to claim 6 or 7, **characterised in that** the size and/or the deviation of at least the peak-to-valley value $D_{z,a,ptv}$, $D_{z,a}{}^{\varphi}{}_{ptv}$, $D_{z,s,ptv}$ and/or of the actual value $Z_{p,s}$, $Z_{p,a}$ is represented with respect to the respective workpiece position.

9. Method according to claim 6, 7 or 8, **characterised in that**, when representing the differential value and/or the contouring differential value $D_{z,s}$, $D_{z,a}$, $D_{z,a}{}^{\varphi}$, an optical distinction between negative (3) and positive (2) values and/or with respect to the amount (3.1 - 3.3, 2.1 - 2.3) of the values is made.

10. Method according to any one of claims 6 to 9, **characterised in that** positive (2) and/or negative (3) differential values and/or contouring differential values $D_{z,s}$, $D_{z,a}$, $D_{z,a}{}^{\varphi}$ are optically graduated by different colour tones with respect to their amount (3.1 - 3.3, 2.1 - 2.3) and/or by different colour tone intensities with respect to the amount (3.1 - 3.3, 2.1 - 2.3) of the values.

11. Method according to any one of claims 6 to 10, **characterised in that** a superimposed representation of the differential value and/or of the contouring differential value $D_{z,s}$, $D_{z,a}$, $D_{z,a}{}^{\varphi}$ and of the actual value $Z_{p,s}$, $Z_{p,a}$ is provided, wherein the respective scale for the two values is different.

12. Method according to any one of claims 1 to 5, **characterised in that** the desired values $C_{bi}$, $X_{bi}$ and/or the differential values $D_{x/c,a}$, $D_{x/c,s}$ and/or the contouring differential value $D_{x/c,s}{}^{\varphi}$, $D_{x/c,a}{}^{\varphi}$ for the control system and/or for the drive are calculated for one or several other axes x, c.

13. Method according to any one of claims 3 to 5, **characterised in that** the peak-to-valley value $D_{x/c,a,ptv}$, $D_{x/c,a}{}^{\varphi}{}_{ptv}$, $D_{x/c.s,ptv}$, $D_{x/c,s}{}^{\varphi}{}_{ptv}$ for the control system and/or for the drive is calculated for one or several other axes x, c.

14. Method according to any one of claims 4 to 5, **characterised in that** the error differential value $D_{x/c,a}{}^{f}$, $D_{x/c,s}{}^{f}$ for the control system and/or for the drive is calculated for one or several other axes x, c.

15. Method according to any one of claims 1 to 5 or 12 to 14, **characterised in that** during the machining of the workpiece (1), a corrective cut at least using the differential values $D_{z,s}$, $D_{z,a}$, $D_{z,a}{}^{\varphi}$ is provided in addition to a main cut and an optional fine cut.

16. Method according to claim 1, **characterised in that** the values C, X, Z of the axes c, x, z are converted into the Cartesian coordinate system or into the polar coordinate system.

17. Method according to claim 1, **characterised in that** the values C, X, Z of the axes c, x, z are converted for the use of a circular carbide tip, said conversion starting from a theoretical cutting point of an ideal punctiform tool, wherein the circular carbide tip has a centre that corresponds to the theoretical cutting point.

18. Method according to any one of claims 1 to 15, **characterised in that** at least one differential value $D_{z,a}$ and/or one contouring differential value $D_{z,a}{}^{\varphi}$ is used as an exclusion criterion for the control-system actual values ($C_{p,s}$, $X_{p,s}$, $Z_{p,s}$) and/or as an adjustment criterion for the various machine parameters.

19. Chip removal machine with a mechanical drive for a tool and/or a workpiece (1), said mechanical drive being closed-loop controlled by a control system, wherein the closed-loop control has several values C, X, Z of at least three spatial axes c, x, z for the control system and for the drive, **characterised in that** a method according to any one of claims 1 to 14 is used for determining the deviation of the controlled variables.

**Revendications**

1. Procédé de définition d'une divergence d'au moins une grandeur réglée de machines d'usinage par enlèvement de copeaux pour la fabrication de lentilles optiques en matériau synthétique avec un entraînement mécanique régulé par une commande pour un outil et/ou une pièce (1), la régulation réglant plusieurs valeurs C, X, Z en ce qui concerne au moins trois axes spatiaux c, x, z pour la commande et pour l'entraînement, et les valeurs C, X, Z présentant, en ce qui concerne les axes c, x, z, une relation fonctionnelle $f_{bi}$ sous la forme $Z = f_{bi}(C, X)$,

a) un protocole étant établi avec plusieurs
valeurs effectives de commande $(C_{p,s}, X_{p,s}, Z_{p,s})$ et/ou
valeurs effectives d'entraînement $(C_{p,a}, X_{p,a}, Z_{p,a})$
saisies par des moyens de mesure,
b) une valeur de consigne de commande étant calculée selon
$Z_{bi,s} = f_{bi} (C_{p,s}, X_{p,s})$ et/ou une
valeur de consigne d'entraînement étant calculée selon
$Z_{bi,a} = f_{bi} (C_{p,a}, X_{p,a})$
au moins en ce qui concerne l'axe z,
c) une valeur différentielle de commande étant calculée selon
$D_{z,s} = Z_{p,s} - Z_{bi,s}$ et/ou
une valeur différentielle d'entraînement étant calculée selon
$D_{z,a} = Z_{p,a} - Z_{bi,a}$
au moins en ce qui concerne l'axe z,
d) une valeur différentielle de traînée étant déterminée selon
$D_{z,a}^{\varphi} = Z_{p,a} - Z_{bi,a}^{\varphi}$ avec
$Z_{bi,a}^{\varphi} = f_{bi} (C_{p,a} + \Delta\varphi, X_{p,a})$
au moins pour l'entraînement et l'axe z, la valeur $\Delta\varphi$ correspondant à un déphasage de l'axe c.

2. Procédé selon la revendication 1,
**caractérisé en ce que**
le déphasage $\Delta\varphi$ est entre 0,5° et 3°, en particulier égal à 1,0°, la détermination de $Z_{bi,a}^{\varphi}$ s'effectuant entre $+\Delta\varphi$ et $-\Delta\varphi$ avec une grandeur de pas entre 0,05° et 0,2°, en particulier égale à 0,1°.

3. Procédé selon la revendication 1 ou 2,
**caractérisé en ce que**,
au moins à partir des valeurs différentielles $D_{z,s}$, $D_{z,a}$ et/ou à partir des valeurs différentielles de traînée $D_{z,a}^{\varphi}$, au moins de l'axe z, il est calculé respectivement une valeur peak-to-valley (crête à creux) pour la commande selon

$$D_{z,s,ptv} = D_{z,s,max} - D_{z,s,min}$$

et pour l'entraînement selon

$$D_{z,a,ptv} = D_{z,a,max} - D_{z,a,min}$$

$$D_{z,a}{}^{\varphi}{}_{ptv} = D_{z,a,max}{}^{\varphi} - D_{z,a,min}{}^{\varphi},$$

$D_{z,s}/_{a,min}$ correspondant à la valeur différentielle minimale et $D_{z,s}/_{a,max}$ à la valeur différentielle maximale de la mesure respective, et $D_{z,a,max}{}^{\varphi}$, $D_{z,s}/_{a,min}{}^{\varphi}$ correspondant à la valeur différentielle minimale ou maximale en prenant en compte $+/- \Delta\varphi$.

4. Procédé selon une des revendications précédentes,
**caractérisé en ce que**,
au moins pour l'entraînement et au moins en ce qui concerne l'axe z, il est déterminé une valeur différentielle d'erreur selon

$$D_{z,a}{}^{f} = Zp,a - Zbi,a{}^{f}$$

avec

$$Z_{bi,a}{}^f = f_{bi} (C_{p,s}, X_{p,s})$$

**5.** Procédé selon une des revendications précédentes,
**caractérisé en ce que**
la fonction $f_{bi}$ représente un spline spirale et/ou un spline surface bicubique.

**6.** Procédé selon une des revendications précédentes,
**caractérisé en ce que**
les valeurs différentielles $D_{z,a}$, $D_{z,s}$ et/ou les valeurs différentielles de traînée $D_{z,a}{}^\varphi$ et ou la valeur effective $Z_{p,s}$, $Z_{p,a}$ au moins l'axe z sont représentées.

**7.** Procédé selon une des revendications 3 à 6,
**caractérisé en ce que**
les valeurs peak-to-valley respectives $D_{z,a,ptv}$, $D_{z,s,ptv}$, $D_{z,a}{}^\varphi{}_{ptv}$ et/ou la valeur effective $Z_{p,s}$, $Z_{p,a}$ d'au moins l'axe z sont représentées, au moins la représentation de la valeur peak-to-valley respectivement la plus petite étant effectuée.

**8.** Procédé selon la revendication 6 ou 7,
**caractérisé en ce que**
la grandeur et/ou la divergence d'au moins la valeur peak-to-valley $D_{z,a,ptv}$, $D_{z,a}{}^\varphi{}_{ptv}$, $D_{z,s,ptv}$ et/ou de la valeur effective $Z_{p,s}$, $Z_{p,a}$ est représentée sur la position de pièce respective.

**9.** Procédé selon la revendication 6 , 7 ou 8,
**caractérisé en ce que**,
lors de la représentation de la valeur différentielle et/ou de la valeur différentielle de traînée $D_{z,s}$, $D_{z,a}$, $D_{z,a}{}^\varphi$, il est effectué une distinction optique entre des valeurs négatives (3) et positives (2) et/ou selon le montant (3.1 - 3.3, 2.1 - 2.3) des valeurs.

**10.** Procédé selon une des revendications 6 à 9,
**caractérisé en ce que**
des valeurs différentielles positives (2) et/ou négatives (3) et/ou des valeurs différentielles de traînée $D_{z,s}$, $D_{z,a}$, $D_{z,a}{}^\varphi$, sont, en fonction leur montant (3.1 - 3.3, 2.1 - 2.3), échelonnées optiquement avec différentes nuances de couleur, et/ou selon le montant (3.1 - 3.3, 2.1 - 2.3) des valeurs avec différentes intensités de nuances de couleur.

**11.** Procédé selon une des revendications 6 à 10,
**caractérisé en ce**
**qu**'une représentation superposée de la valeur différentielle et /ou de la valeur différentielle de traînée $O_{z,s}$, $D_{z,a}$, $O_{z,a}{}^\varphi$ et de la valeur effective $Z_{p,s}$, $Z_{p,a}$ est prévue, l'échelle respective étant différente pour les deux valeurs.

**12.** Procédé selon une des revendications 1 à 5,
**caractérisé en ce que**,
pour un ou plusieurs autres axes x, c, les valeurs de consigne $C_{bi}$, $X_{bi}$ et/ou les valeurs différentielles $D_{x/c,a}$, $D_{x/c,s}$ et/ou la valeur différentielle de traînée $D_{x/c,s}{}^\varphi$, $D_{x/c,a}{}^\varphi$ sont calculées pour la commande et/ou pour l'entraînement.

**13.** Procédé selon une des revendications 3 à 5,
**caractérisé en ce que**,
pour un ou plusieurs autres axes x, c, la valeur peak-to-valley $D_{x/c,a,ptv}$, $D_{x/c,a}{}^\varphi{}_{ptv}$, $D_{x/c,s,ptv}$, $D_{x/c,s}{}^\varphi{}_{ptv}$ est calculée pour la commande et/ou pour l'entraînement.

**14.** Procédé selon une des revendications 4 à 5,
**caractérisé en ce que**,
pour un ou plusieurs autres axes x, c, la valeur différentielle d'erreur $D_{x/c,a}{}^f$, $D_{x/c,s}{}^f$ est calculée pour la commande et/ou pour l'entraînement.

**15.** Procédé selon une des revendications 1 à 5 ou 12 à 14,
**caractérisé en ce que**,

lors de l'usinage de la pièce (1) par enlèvement de copeaux, il est prévu à titre supplémentaire, en plus d'une coupe principale et d'une coupe fine en option, une coupe de correction, au moins avec utilisation des valeurs différentielles $D_{z,s}$, $D_{z,a}$, $D_{z,a}^{\varphi}$.

**16.** Procédé selon la revendication 1,
**caractérisé en ce que**
les valeurs C, X, Z des axes c, x, z sont converties dans le système de coordonnées cartésien ou dans le système de coordonnées polaire.

**17.** Procédé selon la revendication 1,
**caractérisé en ce que**,
en partant, d'un point de coupe théorique d'un outil ponctuel idéal, les valeurs C, X, Z des axes c, x, z sont converties pour l'utilisation d'une plaquette de coupe circulaire, la plaquette de coupe circulaire présentant un point médian qui correspond au point de coupe théorique.

**18.** Procédé selon une des revendications 1 à 15,
**caractérisé en ce que**
au moins une valeur différentielle $D_{z,a}$ et/ou une valeur différentielle de traînée $O_{z,a}^{\varphi}$ est utilisée comme critère d'exclusion pour les valeurs effectives de commande ($C_{p,s}$, $X_{p,s}$, $Z_{p,s}$) et/ou comme critère de réglage pour les différents paramètres de machine.

**19.** Machine d'usinage par enlèvement de copeaux, avec un entraînement mécanique régulé par le biais d'une commande pour un outil et/ou une pièce (1), la régulation présentant plusieurs valeurs C, X, Z d'au moins trois axes spatiaux c, x, z pour la commande et pour l'entraînement,
**caractérisée en ce que**,
pour la détermination de la divergence des grandeurs réglées, il est utilisé un procédé selon une des revendications 1 à 14.

## Fig.1

## Fig.2

Radius    30.621 mm

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 425958
- WO 0237168 A

- DE 19919147 A1